# EUROPÄISCHE PATENTSCHRIFT

(11) **EP 1 820 052 B1**
(45) Veröffentlichungstag und Bekanntmachung des Hinweises auf die Patenterteilung: **13.07.2011**
(21) Anmeldenummer: 05815469.1
(22) Anmeldetag: 22.11.2005
(51) Int. Cl.: G02B 6/38

(54) **UNTERWASSER-LICHTWELLENLEITER-STECKVERBINDER**
UNDERWATER OPTICAL WAVEGUIDE CONNECTOR
CONNECTEUR ENFICHABLE POUR GUIDE D'ONDES OPTIQUES IMMERGE

(30) Priorität: 09.12.2004 DE 102004059258
(43) Veröffentlichungstag der Anmeldung: 22.08.2007
(73) Patentinhaber: Gisma Steckverbinder GmbH, 24539 Neumünster (DE)
(72) Erfinder: MALETZKY, Manfred, 24340 Eckernfoerde (DE); HIRSCH, Oliver, 24159 Kiel (DE)
(74) Vertreter: Biehl, Christian
(86) Internationale Anmeldenummer: PCT/DE2005/002100
(87) Internationale Veröffentlichungsnummer: WO 2006/060979

(56) Entgegenhaltungen:
- WO-A-2005/045175
- US-A- 5 015 060
- US-A- 5 838 857

## Beschreibung

Die Erfindung betrifft einen Lichtwellenleiter-Steckverbinder nach dem Oberbegriff des Hauptanspruchs.

Lichtwellenleiter zur Verwendung vorwiegend im Wasser werden mit einem Dosenteil mit wenigstens einem in einem Kanal des Dosenteils angeordneten ersten Lichtwellenleiterkontakt und mit einem Steckerteil mit wenigstens einem in einem Kanal des Steckerteils angeordneten zweiten Lichtwellenleiterkontakt versehen, wobei der Kanal des Steckerteils mit einem gegen die Kraft einer Feder verschieblichen Kolben abgedichtet ist.

Ein derartiger Steckverbinder für Lichtwellenleiter (LWL) ist beispielsweise aus der EP 1 279 981 A2 bekannt. Dieser Steckverbinder ist derart ausgestaltet, dass beim Stecken eines Dosenteils mit einem an seinem einen Ende angeordneten, freiliegenden Lichtwellenleiter in einen Steckerteil, eine Spülung des in die Buchse eingeführten LWL-Kontaktstifts erfolgt, wobei in den Kontaktraum eingetretene Verunreinigungen abgeführt werden.

Bei derartigen Steckverbindern, die in ungestecktem Zustand mit einem Feuchtigkeitsfilm benetzt sind, stellt sich das Problem, dass die Steckverbinder eine ideale Oberfläche für einen Aufwuchs von beispielsweise marinen Pflanzen oder Tieren bieten, der durch Spülung nicht beseitigt werden kann. Insbesondere ist eine starke Verschmutzung durch Aufwuchs selbst kleinster Lebewesen, z. B. Mikroorganismen, bei Lichtwellenleitern problematisch, weil eine Verschmutzung der Schnittstellenfläche des Lichtwellenleiterkontakts, gerade bei kleinen Lichtwellenleiterdurchmessern, zu einer Dämpfung des Signals führt.

Zur Vermeidung dieses Problems sind beispielsweise aus der WO 02/39169 A1 oder der WO 03/048827 A2 Einrichtungen bekannt, die die Lichtwellenleiterkontaktflächen der Steckverbinder im ungesteckten Zustand vor dem direkten Kontakt mit Feuchtigkeit schützen. Der Aufbau dieser Art Steckverbinder ist allerdings kompliziert und bedarf bei seiner Herstellung aufgrund seiner Komplexität eines erhöhten Arbeitsaufwands.

Aufgabe der Erfindung ist es deshalb, einen Lichtwellenleiter-Steckverbinder zu schaffen, der die Lichtwellenleiter mit einfachen Mitteln in ungestecktem und gestecktem Zustand vor einer Verschmutzung schützt.

Die Aufgabe wird gelöst durch einen Lichtwellenleiter-Steckverbinder mit den Merkmalen des Anspruches 1. Der vorteilhafte LWL-Steckverbinder besitzt zur Verwendung vorwiegend im Wasser mit einem Dosenteil mit wenigstens einem in einem Kanal des Dosenteils angeordneten ersten Lichtwellenleiterkontakt und mit einem Steckerteil mit wenigstens einem in einem Kanal des Steckerteils angeordneten zweiten Lichtwellenleiterkontahrt, wobei der Kanal des Steckerteils mit einem gegen die Kraft einer Feder verschiebbaren Kolben abgedichtet ist, wobei das Dosenteil eine die Schnittstellenfläche des Lichtwellenleiterkontakts abdichtende Schutzkappe aufweist, die in nicht gestecktem Zustand die Schnittstellenfläche des Lichtwellenleiterkontakts abdeckt und in gestecktem Zustand die Schnittstellenfläche freigebend verschwenkend ausgebildet ist, und das Steckerteil eine den verschiebbaren federbelasteten Kolben aufnehmende Bahn aufweist, die in wenigstens einem Abschnitt schräg zur Achse des wenigstens einen Lichtwellenleiterkontakts des Steckerteils ausgebildet ist, wobei beim Steckvorgang die Schutzkappe des Dosenteils und der verschiebbare, federbelastete Kolben durch die Bahn geführt wird. Die Unteransprüche geben vorteilhafte Ausgestaltungen der Erfindung an.

Der Grundgedanke der Erfindung liegt darin, die Schnittstellenfläche des Lichtwellenleiterkontaktes des Steckerteils im ungesteckten Zustand mit einem abdichtenden Kolben abzudecken, der beim Steckvorgang einem Kanal des Steckerteils gegen die Kraft einer Feder in einem Gang verschiebt, der wenigstens in einem Abschnitt schräg zur Achse des Lichtwellenleiters ausgebildet ist und ebenfalls die Schnittstellenfläche des Lichtwellenleiterkontaktes des Dosenteils im ungesteckten Zustand mit einem abdichtenden Schutzkappe abzudecken wobei die Kappe ebenfalls dem Gang im Stekkerteil während der Steckung folgt. Dadurch werden der Kolben und die Schutzkappe seitlich abgelenkt und die Lichtwellenleiterkontakte des Steckerteils und des Dosenteils treten ungehindert in Kontakt.

Beim Lösen der Steckverbindung gleiten der Kolben und die Schutzkappe wieder vor die Lichtwellenleiter des Steckerteils und des Dosenteils und verhindern so eine Verschmutzung der Kontaktoberflächen der Lichtwellenleiter.

Die Erfindung wird im folgenden anhand einer Zeichnung beschrieben. Dabei zeigt:
- Fig. 1: einen Längsschnitt durch das erfindungsgemäße Steckerteil im unge- steckten Zustand,
- Fig. 2: einen Längsschnitt durch das erfindungsgemäße Dosenteil im unge- steckten Zustand,
- Fig. 3: einen Längsschnitt durch das erfindungsgemäße Dosenteil im ungesteck- ten Zustand in isometrischer Darstellung, und
- Fig. 4: einen Längsschnitt durch die vollständig zusammengesteckte Steckver- bindung.

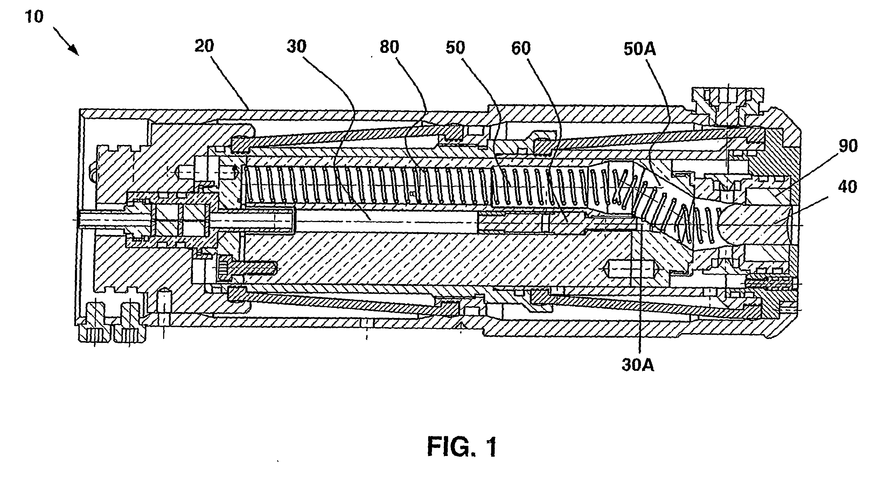

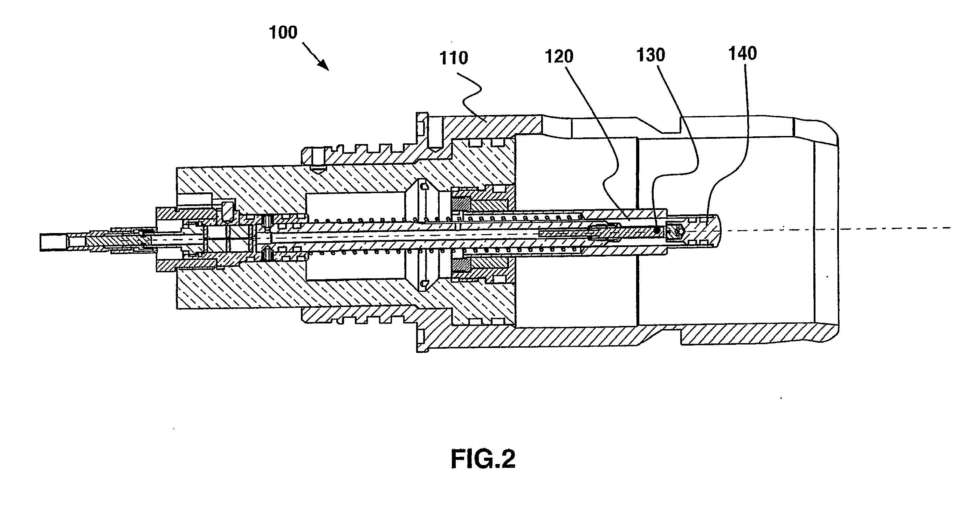

**Fig. 1** zeigt eine schematische Darstellung des erfindungsgemäßen Steckerteils in einem Längsschnitt. Das Steckerteil 10 besteht aus einem Gehäuse 20 mit wenigstens einem, bevorzugt konzentrisch angeordneten Kanal 30, in dem ein Lichtwellenleiterkontakt 60 angeordnet ist. Das Steckerteil 10 wird gegenüber der Umgebung durch einen Kolben 40 gegen die Elastomerdichtung 90 verschlossen, der im nicht gesteckten Zustand von einer Feder in der das Steckerteil 10 verschließenden Position gehalten wird. Die Feder 80 verläuft in der Bahn 50, in der auch der Kolben 40 bei Einführen des in Fig. 2 abgebildeten Steckteils 100 entgegen der Kraft der Feder verschoben wird.

Die Bahn 50 besitzt einen Durchmesser, der etwas größer als der Durchmesser des Kolbens 40 ist und verläuft in wenigstens einem Abschnitt 50a schräg zur Achse des Kanals 30 und damit des Lichtwellenleiterkontakts des Steckerteils 10. Dadurch wird gewährleistet, dass beim Steckvorgang der Kolben 40 seitlich verschwenkt wird und den vorderen Abschnitt des Kanals 50a, durch den der Lichtwellenleiterkontaktes des Dosenteils 100 treten soll, und damit auch die Schnittstellenfläche des Lichtwellenleiterkontakts 60 freigibt.

Damit der Kolben 40 seitlich verschwenkt werden kann, ist es - wie in dem gezeigten Beispiel - möglich, den Durchmesser des Kolbens 40 deutlich größer als den Durchmesser des freizulegenden Kanalabschnitts 30a anzulegen oder bei annähernd gleichen Größenverhältnissen, beispielsweise im Rahmen einer Miniaturisierung, dem Kolben 40 und der den Kolben 40 aufnehmenden Bahn 50 eine von dem Kanal abweichende äußere geometrische Form zu geben, sodass der Kolben zwar in der Bahn 50 verschiebbar ist, nicht jedoch in den vorderen Abschnitt des Kanals 30a eintreten kann.

**Fig. 2** zeigt eine schematische Darstellung des erfindungsgemäßen Dosenteils 100 in einem Längsschnitt. Das Dosenteil 100 besteht aus einem Gehäuse 110 mit wenigstens einem, bevorzugt zentrisch angeordneten Kanal 120, in dem ein Lichtwellenleiter angeordnet ist. Die Schnittstellenfläche des Lichtwellenleiterkontakts 130 ist im nicht gestreckten Zustand von einer Schutzkappe 140 gegen Einflüsse der Umgebung schützend abgedeckt. Dabei ist die Schutzkappe 140 verschwenkbar ausgebildet, um im gesteckten Zustand verschwenkt zu werden und die Schnittstellenfläche des Lichtwellenleiterkontakts 130 freizugeben. Vorzugsweise ist die Schutzkappe 140 mit dem Gehäuse 110 des Dosenteils 100 über ein Doppelgelenk verbunden, um eine Führung der Schutzkappe 140 in der Bahn 50 des Steckerteils 10 zu erleichtern.

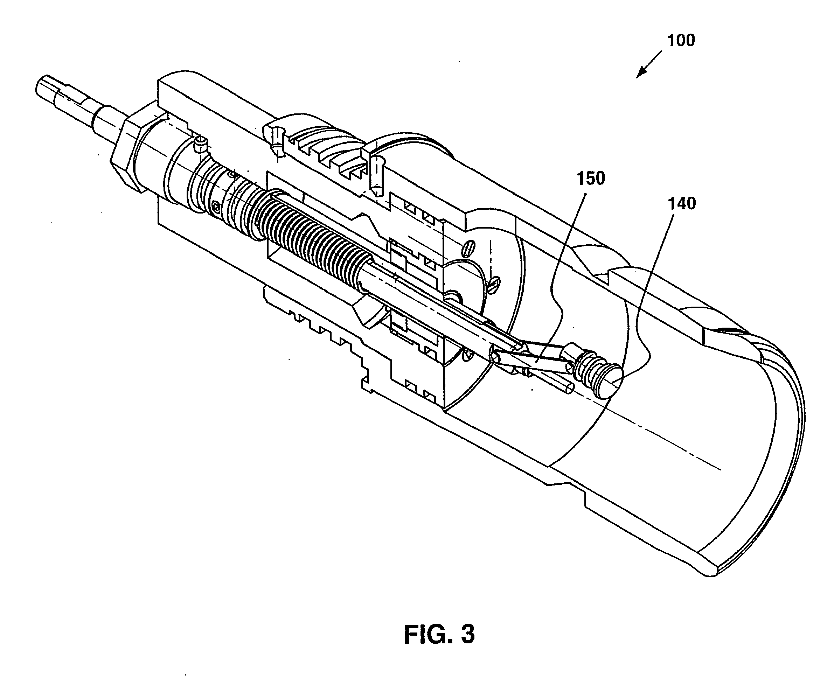

**Fig. 3** zeigt den Aufbau des Dosenteils 100 in einer isometrischen Schnittdarstellung im ungesteckten Zustand.

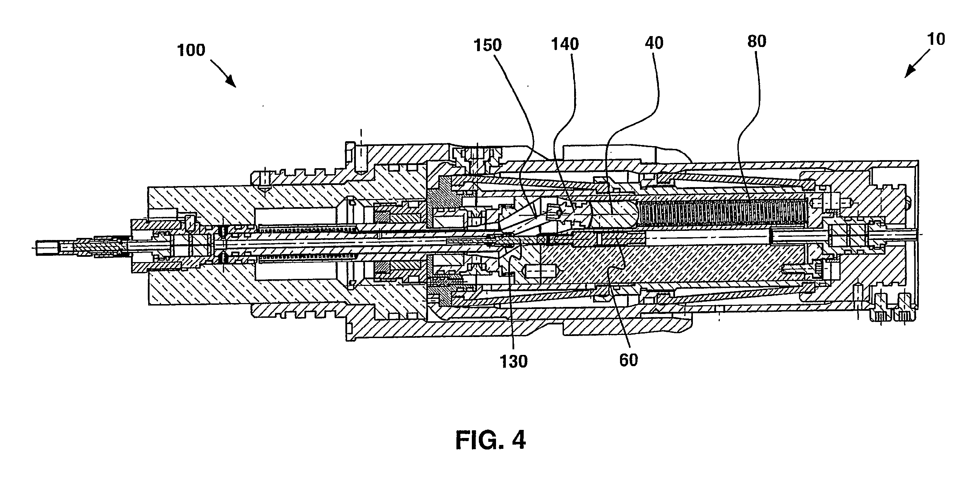

**Fig. 4** zeigt eine Detaildarstellung im Längsschnitt durch die vollständig zusammengesteckte Steckverbindung. Die Schutzkappe 140 des Dosenteils 100 hat den Kolben 40 des Steckerteils 10 entgegen der Kraft der Feder 80 über den quer zur Achse des Kanals 30 des Steckerteils 10 Abschnitt 50a in die Bahn 50 verschoben und ist dabei selbst der Bahn 50, 50a gefolgt. In dem hier gezeigten Ausführungsbeispiel ist deutlich ein die Schutzkappe 140 vom Steckteil beabstandendes Abstandselement 150 zu erkennen, das Teil eines Doppelgelenks ist, mit dem das Einführen der Schutzkappe 140 in die Bahn 50, 50a ermöglicht bzw. erleichtert wird.

Beide Hauptbestandteile der Lichtwellenleitersteckverbindung: der Steckerteil und der Dosenteil weisen in einem besonders bevorzugten Ausführungsbeispiel je einen fluidgefüllten Innenraum auf, der jeweils mit dem Aussendruck über eine oder mehrere Membrane oder einen oder mehrere Schiebekolben einen Druckausgleich zwischen dem Innenraum und der Umgebung ermöglicht.

In einer besonders bevorzugten Ausgestaltung weist das Steckerteil 10 des Lichtwellen-Steckverbinders 10, 100 Mittel zum Spülen des Lichtwellenleiterkontakts 130 des Dosenteils 100 mit der Flüssigkeit auf.

## Patentansprüche

1. Lichtwellenleiter-Steckverbinder zur Verwendung vorwiegend im Wasser mit einem Dosenteil (100) mit wenigstens einem in einem Kanal des Dosenteils (100) angeordneten ersten Lichtwellenleiterkontakt und mit einem Steckerteil (10) mit wenigstens einem in einem Kanal des Steckerteils (10) angeordneten zweiten Lichtwellenleiterkontakt, wobei der Kanal des Steckerteils (10) mit einem gegen die Kraft einer Feder verschiebbaren Kolben (40) abgedichtet ist, **dadurch gekennzeichnet, dass**
das Dosenteil (100) eine die Schnittstellenfläche des Lichtwellenleiterkontakts abdichtende und verschwenkbar ausgebildete Schutzkappe (140) aufweist, die in nicht gestecktem Zustand die Schnittstellenfläche des Lichtwellenleiterkontakts abdeckt, und
das Steckerteil (10) eine den verschiebbaren federbelasteten Kolben (40) aufnehmende Bahn (50, 50a) aufweist, die in wenigstens einem Abschnitt (50a) schräg zur Achse des wenigstens einen Lichtwellenleiterkontakts des Steckerteils (10) ausgebildet ist,
wobei beim Steckvorgang die Schutzkappe (140) des Dosenteils (100) den federbelasteten Kolben (40) verschiebend und unter Freigabe des Lichtwellenleiterkontakts des Dosenteils (100) und Freigabe des im Kanal des Steckterteils (10) angeordneten Lichtwellenleiterkontakts durch die Bahn (50, 50a) geführt wird.

2. Lichtwellenleiter-Steckverbinder nach Anspruch 1, **dadurch gekennzeichnet, dass** die Schutzkappe (140) mit dem Dosenteil (100) über eine Verschwenkeinrichtung verbunden ist.

3. Lichtwellenleiter-Steckverbinder nach einem der vorhergehenden Ansprüche, **dadurch gekennzeichnet, dass** wenigstens der Innenraum des Steckerteils (10) mit einer Flüssigkeit gefüllt ist und dass das Steckerteil (10) eine einen Druckausgleich zwischen dem Innenraum und der Umgebung bewirkende, den Innenraum gegenüber der Umgebung abgrenzende Membran aufweist.

4. Lichtwellenleiter-Steckverbinder nach Anspruch 3, **dadurch gekennzeichnet, dass** das Steckerteil (10) Mittel zum Spülen des Lichtwellenleiters des Dosenteils (100) mit der Flüssigkeit aufweist.

## Claims

1. An optical waveguide connector predominantly for use in water, provided with a socket part (100) comprising at least one first optical waveguide contact which is arranged in a channel of the socket part (100) and a plug part (10) comprising at least one second optical waveguide contact which is arranged in a channel ofthe plug part (10), wherein the channel ofthe plug part (10) is sealed with a piston (40) which can be displaced counter to the force of a spring, **characterized in that**
the socket part (100) has a pivoting protective cap (140) which seals the interface surface ofthe optical waveguide contact and which covers the interface surface of the optical waveguide contact in an unplugged state, and
the plug part has a track (50, 50a) which receives the displaceable spring-loaded piston and which, in at least one section (50a), is inclined in relation to the axis of the at least one optical waveguide contact of plug part (10),
wherein during the plug-in process the protective cap (140) of the socket part (100) displaces the spring-loaded piston, releasing the optical waveguide contact part ofthe socket part (100) and the optical waveguide contact arranged in the channel ofthe plug part (10), when guided through the track (50, 50a).

2. The optical waveguide connector according to Claim 1, **characterized in that** the protective cap (140) is connected to the socket part (100) by means of a pivoting device.

3. The optical waveguide connector according to one of the preceding claims, **characterized in that** at least the interior of the plug part (10) is filled with a liquid and that the plug part (10) has a diaphragm that delimits the interior relative to the surroundings and effects pressure equalization between the interior and the surroundings.

4. The optical waveguide connector according to Claim 3, **characterized in that** the plug part (10) has means for flushing the optical waveguide of the socket part (100) with the liquid.

## Revendications

1. Connecteur fibre optique enfichable pour une utilisation prépondérante dans l'eau avec une prise (100) avec au moins un premier contact fibre optique disposé dans un canal de la partie prise (100) et avec une partie fiche (10) avec au moins un deuxième contact fibre optique, disposé dans un canal de la fiche (10) fermé de manière étanche par un piston (40) coulissant contre la force d'un ressort, **caractérisé par le fait que**
la partie prise (100) dispose d'un cache (140) pivotant, qui ferme de manière étanche la section d'interface du contact fibre optique et qui la couvre lorsque la fiche n'est pas enfiché, et
que la partie prise (10) dispose d'une glissière (50, 50a) qui accueille le piston coulissant chargé par ressort (40) et dont au moins une section (50a) est disposée obliquement par rapport à l'axe d'au moins un contact fibre optique de la partie fiche (10),
d'une telle manière que lors de la manoeuvre d'enfichage le cache (140) de la partie prise (100) est guidé par la glissière (50, 50a) en déplaçant le piston chargé par ressort (40) et en libérant le contact fibre optique de la partie prise (100) et le contact fibre optique disposé dans le canal de la partie prise (10).

2. Connecteur fibre optique enfichable selon la revendication 1, **caractérisé par le fait que** le cache (140) est lié à la partie prise (100) par un dispositif de pivotement.

3. Connecteur fibre optique enfichable selon une des revendications précédentes, **caractérisé par le fait qu'**au moins l'espace intérieur de la partie fiche (10) est rempli avec un liquide et que la partie fiche (10) dispose d'une membrane qui, en équilibrant la pression entre l'espace intérieur et l'environnement, sépare l'espace intérieur de l'environnement.

4. Connecteur fibre optique selon la revendication 3, **caractérisé par le fait que** la partie fiche (10) dispose de moyens pour rincer la fibre optique de la partie prise (100) avec le liquide.
